Europäisches Patentamt

European Patent Office

Office européen des brevets

(11) Publication number: **0 038 859**
**B1**

(12) **EUROPEAN PATENT SPECIFICATION**

(45) Date of publication of patent specification: **16.10.85**

(21) Application number: **79901335.4**

(22) Date of filing: **09.10.79**

(86) International application number:
**PCT/JP79/00254**

(87) International publication number:
**WO 81/00984 16.04.81 Gazette 81/09**

(51) Int. Cl.⁴: **B 29 C 49/00, B 65 D 1/02**

(54) Process for producing a stretch-blow molded polypropylene bottle.

(43) Date of publication of application:
**04.11.81 Bulletin 81/44**

(45) Publication of the grant of the patent:
**16.10.85 Bulletin 85/42**

(84) Designated Contracting States:
**FR**

(56) References cited:
**FR-A-1 339 479**
**GB-A-1 446 587**
**JP-A-49 126 765**
**JP-B-50 013 829**
**JP-B-50 014 265**
**JP-B-50 014 266**
**US-A-3 655 848**

(73) Proprietor: **Yoshino Kogyosho CO., LTD.**
**No. 2-6, Ojima 3-chome, Koto-ku**
**Tokyo 136 (JP)**

(72) Inventor: **NISHIKAWA, Masanori**
**Higashiohtake 727-4 Isehara-shi**
**Kanagawa 259-11 (JP)**
Inventor: **HATTORI, Masao**
**Tsurumaki 1621-3 Hatano-shi**
**Kanagawa 257 (JP)**

(74) Representative: **Descourtieux, Philippe et al**
**CABINET BEAU de LOMENIE 55 rue**
**d'Amsterdam**
**F-75008 Paris (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a process for producing a stretch-blow molded polypropylene bottle according to the first part of the claim.

To date, polyvinyl chloride bottles are generally known as plastics bottles having clarity. Polyvinyl chloride bottles, however, become less used than before on account of problems encountered in the disposal of used bottles and toxicology of monomers contained in polyvinyl chloride.

One of the materials which can replace polyvinyl chloride as a molding material for plastics bottles is polypropylene. Polypropylene, however, is not as clear and mechanically strong as polyvinyl chloride. In order to improve the properties of polypropylene, stretch-blow molding is employed when polypropylene bottles are produced.

Stretch-blow molding crystallizes molecules in the resin and provides bottles with clarity, mechanical strength, and gas barrier properties. Stretch-blow molded polypropylene bottles are still inferior in clarity to polyvinyl chloride bottles.

There has been a strong desire for polypropylene bottles which are at least as clear as polyvinyl chloride bottles.

It has already proposed by US—A—3655848 a process for producing a stretch-blow molded propylene bottle. This known process comprises the step of heating rapidly both the outside and the inside of the parison and the step of cooling rapidly said outside and inside of the parison. However said step of cooling takes place before the step of blow molding so that the bottle is not so clear as it is required.

On the other hand the process described by FR—A—1339479 does not provide for a rapid cooling of the inside of the parison since the air for blow molding is preheated.

Disclosure of the Invention

The present invention has been completed to satisfy the above-mentioned desire, based on the finding that the poor clarity of polypropylene bottles is attributable to many fine streaks which are formed by strain on the bottle inside wall. By making the inside of the bottle extremely smooth, it is possible to make the bottle as clear as polyvinyl chloride bottles.

The process comprises the known steps of heating rapidly the inside of the parison, cooling rapidly the inside and heating the parison up to blow-molding temperature. According to the invention said rapid heating of the inside takes place simultaneously with the heating up to the blow-molding temperature.

Thus the polypropylene bottle produced according to the invention has a very smooth inside surface free of fine streaks, as shown in Fig. 9. It was found that many fine streaks which are formed by strain on the inside wall of the bottle are remains of the fine streaks formed on the inside wall of the parison prior to blow-molding. According to the process of this invention, the blow step starts after the fine streaks on the inside of the parison have been removed by the method mentioned below.

According to said method, the inside of the bottomed parison or unbottomed cylindrical parison is heated rapidly to 170°C to 220°C which is a melting point of polypropylene simultaneously with blow-molding step. The heating of the inside of the parison causes fine streaks to disappear.

The inside of the parison becomes very smooth and is free of fine streaks, as shown in Fig. 8, and the inside of the bottle molded, followed by rapid cooling, from such a parison is also smooth and free of fine streaks, as shown in Fig. 9.

The conventional polypropylene bottles are very poor in clarity because many fine streaks formed on the inside of the bottle scatter light, causing the bottle to look white. In contrast, the polypropylene bottles of this invention has very smooth inside surface which makes the bottles look very clear.

Incidentally, experiments revealed that when the inside of the parison is heated rapidly and then cooled slowly, the irregularity of the fine streaks is enhanced by increased strain. (See Fig. 10.) Therefore, it is necessary that the inside of the parison be cooled rapidly after heating, whilst the heating step is simultaneous with the blow-molding step.

It has been confirmed that the bottles which are blow-molded after rapid cooling of the parison inside exhibits greatly improved clarity, mechanical strength, and gas barrier properties. Presumably, this is because the crystallinity of polypropylene increases to a greater extent due to rapid heating and rapid cooling.

As will be apparent from the above mentioned, the bottles produced according to the process of this invention are as clear as polyvinyl chloride bottles and have high mechanical strength and gas barrier properties. All is required in the process of this invention is to heat and cool rapidly the inside of the parison the heating being simultaneous with the blow-molding. The process is simple, and yet provides stretch-blow molded polypropylene bottles.

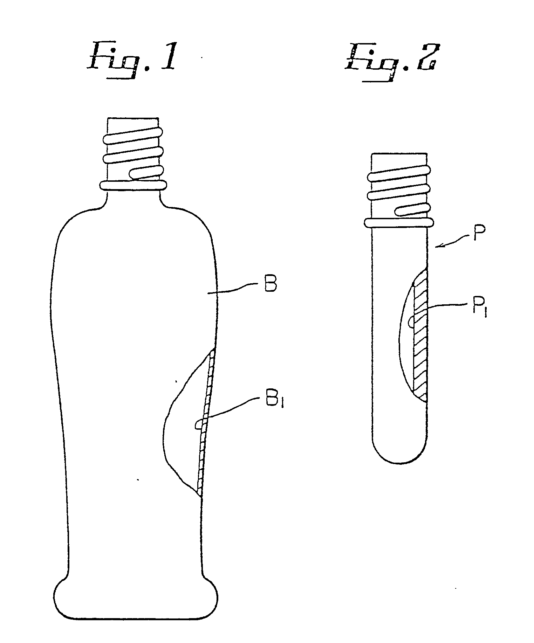

Brief Description of Drawings
Fig. 1 is a partly cutaway front view of a bottle of this invention.

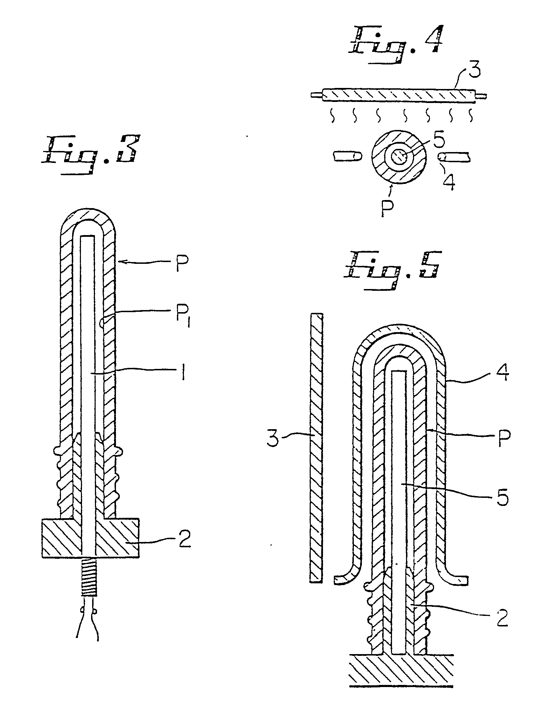

Fig. 2 is a partly cutaway front view of a parison which has undergone heat treatment on the inside.

Fig. 3 is a longitudinal sectional view of a parison which is undergoing heat treatment on its inside.

Fig. 4 is a horizontal sectional view of a parison which is undergoing heat treatment on its inside simultaneously with heating for blow-molding.

Fig. 5 is a longitudinal sectional view of a parison which is undergoing heat treatment on its inside simultaneously with heating for blow- molding.

Fig. 6 is an enlarged view of the inside of the parison before heat treatment.

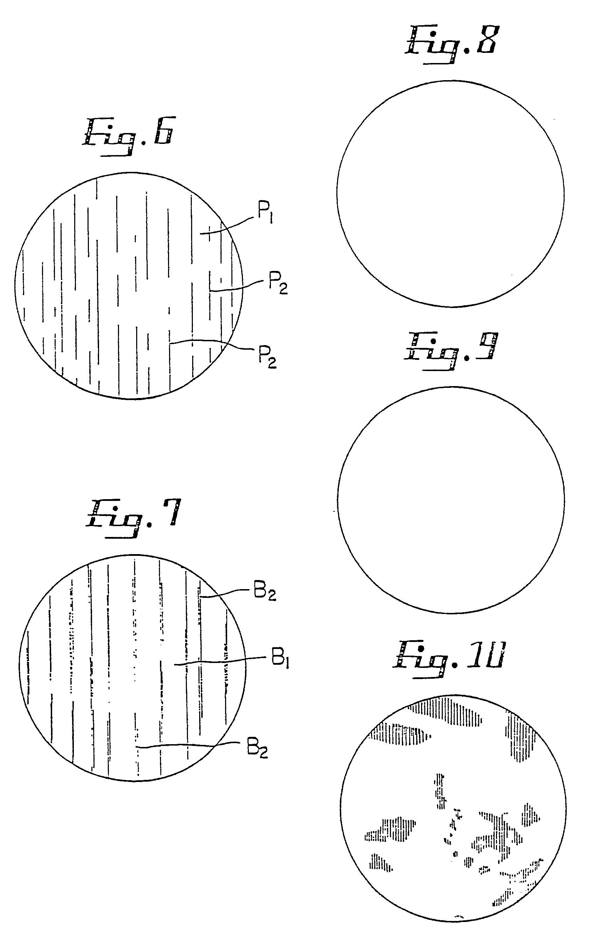

Fig. 7 is an enlarged view of the inside of the conventional bottle.

Fig. 8 is an enlarged view of the inside of the bottle which has undergone heat treatment according to the present invention.

Fig. 9 is an enlarged view of the bottle of this invention.

Fig. 10 is an enlarged view of the inside of the parison which has been cooled slowly after heat treatment.

Best Mode for Carrying Out the Invention We will describe an example of the first process for molding the bottle according to the present invention.

As shown in Fig. 3, an injection molded or extrusion molded polypropylene parison (P), with or without bottom, is fitted to a guide 2 in which is installed a heating means 1 such as an infrared heater which is as long as the parison. The heating means 1 is activated so that the inside $P_1$ of the parison is heated to about 170°C to 220°C which a melting point of polypropylene.

The inside of the parison may also be heated by a heating element 5 placed in the parison, as shown in Figs. 4 and 5. The heating element emits upon activation by high frequency supplied from a high frequency transmitter 4. At the same time, the parison is heated externally by a usual heater 3.

While hot, the parison is molded into a bottle by stretch-blow molding and thereafter the inside is cooled rapidly.

This process, in which the heating of the parison inside is accomplished simultaneously with the usual heating process for blow-molding, requires no additional steps but does require a special mandrel to hold the parison.

This rapid heating relieves strains, permitting the fine streaks on the inside to disappear and making the inside very smooth. The smoothness of the inside wall is fixed by rapid cooling.

**Claim**

A process for producing a stretch-blow molded polypropylene bottle comprising the steps of:
— rapidly heating the inside of a cylindrical parison to 170°C to 220°C followed by
— rapidly cooling the inside
— heating the parison up to blow-molding temperature and stretch-blow molding the parison, characterized in that said rapid heating of the inside takes place simultaneously with the heating up to the blow-molding temperature.

**Patentanspruch**

Verfahren zum Herstellen einer gestreckten blasgeformten Polypropylen-Flasche, bestehend aus den Verfahrensschritten von
— schnellem Erhitzen der Innenseite eines zylindrischen Formlings auf 170°C bis 220°C, gefolgt von
— schnellem Abkühlen der Innenseite,
— Erhitzen des Formlings auf Blasform-Temperatur und Streck-Blasformen des Formlings, dadurch gekennzeichnet, dass das genannte schnelle Erhitzen der Innenseite gleichzeitig mit dem Erhitzen auf die Blasform-Temperatur stattfindet.

**Revendication**

Un procédé pour la production d'une bouteille de polypropylène moulée par étirage-soufflage, comprenant les étapes suivantes:
— chauffage rapide de la face interne d'une préforme cylindrique à 170—220°C suivie de
— refroidissement rapide de la face interne
— chauffage de la préforme jusqu'à la température de moulage par soufflage et moulage par soufflage-étirage de la préforme, caractérisé en ce que ledit chauffage rapide de la face interne a lieu simultanément avec le chauffage jusqu'à la température de moulage par soufflage.

Fig. 1

Fig. 2

Fig.3

Fig.4

Fig.5

*Fig.6*

*Fig.8*

*Fig.7*

*Fig.9*

*Fig.10*